# EUROPEAN PATENT APPLICATION

(11) **EP 4 576 742 A1**
(43) Date of publication of application: **25.06.2025**
(21) Application number: 24220703.3
(22) Date of filing: 17.12.2024
(51) Int. Cl.: H04L 67/52, H04N 23/60, H04W 4/02, H04W 4/021, H04W 4/029, H04N 1/00

(54) **CONTEXT AWARE DIGITAL VISION AND RECOGNITION**

(30) Priority: 19.12.2023 US 202318545465
(71) Applicant: T-Mobile Innovations, LLC, Overland Park, KS 66251-2100 (US)
(72) Inventor: BYRNE, Cameron Brent, Seattle, 98105 (US)
(74) Representative: Suddaby, Mark Edward

(57) **Abstract**

Methods, systems, and a non-transitory computer-readable medium for context aware digital vision are provided. Often, digital capture of information is tedious and prone to errors. This is sometimes the result of an image capture device blindly scanning an image without any context to what the image is or how it will be used. Aspects herein provide utilizing contextual data provided from telecommunications network data to refine digital capture of information.

## Description

### BACKGROUND

Many user equipment (UE) and other mobile devices incorporate optical character recognition (OCR) or digital vision features. For many users, the digital vision function allows for various feature functions including tracking packages, opening applications, gates, and other functions. In some instances, digital vision and OCR functions allow a user to select a string of characters. However, the OCR function can misinterpret one or more of the characters, causing the data entry to be incorrect. As an example, a user may select a string of OCR generated characters that comprise a tracking number. The OCR generated characters may include numbers, letters, and symbols. Shipping companies may have a convention that a particular company's tracking number begins with a unique combination such as "1Z". The OCR function on the user's device may interpret "1Z" as "12" causing the tracking number to be incorrectly input. The OCR or digital vision function lacks contextual awareness to correctly interpret the string of characters.

### SUMMARY

A high-level overview of various aspects of the present technology is provided in this section to introduce a selection of concepts that are further described below in the detailed description section of this disclosure. This summary is not intended to identify key or essential features of the claimed subject matter, nor is it intended to be used as an aid in isolation to determine the scope of the claimed subject matter.

According to aspects herein, methods, systems, and a non-transitory computer-readable medium that provide context aware digital vision and recognition are provided. Often, digital capture of information is tedious and prone to errors. This is sometimes the result of an image capture device blindly scanning an image without any context to what the image is or how it will be used. Aspects herein provide utilizing contextual data provided from telecommunications network data to refine digital capture of information.

### BRIEF DESCRIPTION OF THE SEVERAL VIEWS OF THE DRAWINGS

Implementations of the present disclosure are described in detail below with reference to the attached drawing figures, wherein:
FIG. 1 depicts a diagram of an exemplary network environment in which implementations of the present disclosure may be employed, in accordance with aspects herein;
FIG. 2 depicts a cellular network suitable for use in implementations of the present disclosure, in accordance with aspects herein;
FIG. 3 depicts a use of digital vision on a UE in an exemplary network environment in which implementations of the present disclosure may be employed, in accordance with aspects herein;
FIG. 4 is a flow diagram of a method for context aware digital vision, in accordance with aspects herein; and
FIG. 5 depicts an exemplary computing device suitable for use in implementations of the present disclosure, in accordance with aspects herein.

### DETAILED DESCRIPTION

The subject matter of embodiments of the invention is described with specificity herein to meet statutory requirements. However, the description itself is not intended to limit the scope of this patent. Rather, the inventors have contemplated that the claimed subject matter might be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

Aspects of the description provide contextual awareness for digital vision used in a wireless network. Many user devices provide digital vision or OCR through cameras and applications. When scanning characters, symbols, and objects, the digital vision system can misinterpret one or more characters. Misinterpretations may occur because the digital vision element was blurry, unclear, or faded, to give a few examples. The misinterpretation may lead to user frustration with digital vision systems and with applications that rely on them. A misinterpreted tracking number does not allow a user to receive tracking information about a shipment. When bar codes, quick response (QR) codes or other digital vision elements are not scanned correctly users also do not get the information they request and may not be directed to the correct website or information source.

Misinterpretations are more likely when images are input/scanned with no contextual information to provide insight to the image. For instance, scanning an entire image for any bit of information is different than scanning an image for a specific piece of information (e.g., a tracking number, a credit card number, etc.) just as scanning an entire image is different from scanning an isolated portion of an image. Contextual data can provide insights to speed up the scanning process and create a contextually intelligent scan. Contextual data, as used herein, refers generally to data that identifies a user action, an anticipated user action, a desired piece of data/information, and the like. In short, contextual data is background information that provides a broader understanding of an event/action, person, or thing. In aspects, contextual data is gleaned from network data including a user location, a user's network usage patterns, a user's e-commerce patterns, text message data, and the like. This data can be compiled into a personalized user profile for one or more users of the network.

Networks can compile a plurality of profiles into user cohorts to identify patterns of groups of users in order to utilize machine learning models to apply to user cohorts. For instance, a user cohort may be created for users that are identified to return packages every Saturday morning and, thus, likely need to scan a shipping label to complete the return. In this instance, a model could be applied to the user cohort that primes an image capture device (e.g. UE camera) to search an image for a tracking number. The model may also identify a shipping carrier that has a particular format and, in turn, identify specific characters to look for or a specific location within an image that should be scanned first.

Image capture devices can be utilized to capture a variety of information. Some exemplary use cases include shipping labels, QR codes (e.g., restaurant menus), tracking numbers, and the like. Any of the images captured can have a specific format. For instance, a shipping label will likely include a bar code, a destination address, a return address, etc., and each of those items may be located in a specific position on the shipping label such that it is inferred that a first location is all that is needed to scan a tracking number. Additionally, to avoid ambiguous characters or character mischaracterization, specific shipping carrier protocols can be input into machine learning models to identify that shipping carrier A always uses "1Z" as the first two characters of their tracking number, such that "z" is not mistaken for "2".

This contextual data is provided by the network and is an ongoing user profile such that the contextual data is continuously monitored and updated. Thus, the network identifies when a location of a user changes such that different contextual data is appropriate. For instance, if a user leaves a shipping store and drives across town to a restaurant, the network may determine that shipping contextual data (i.e., a shipping carrier's label format, a tracking number format, etc.) is no longer relevant but the restaurant's menu QR code may be relevant to the user.

Throughout this disclosure, several acronyms and shorthand notations are employed to aid the understanding of certain concepts pertaining to the associated system and services. These acronyms and shorthand notations are intended to help provide an easy methodology of communicating the ideas expressed herein and are not meant to limit the scope of embodiments described in the present disclosure. Further, various technical terms are used throughout this description. An illustrative resource that fleshes out various aspects of these terms can be found in Newton's Telecom Dictionary, 32nd Edition (2022).

Embodiments of the present technology may be embodied as, among other things, a method, system, or computer-program product. Accordingly, the embodiments may take the form of a hardware embodiment, or an embodiment combining software and hardware. An embodiment takes the form of a computer-program product that includes computer-useable instructions embodied on one or more computer-readable media.

Computer-readable media include both volatile and nonvolatile media, removable and nonremovable media, and contemplate media readable by a database, a switch, and various other network devices. Network switches, routers, and related components are conventional in nature, as are means of communicating with the same. By way of example, and not limitation, computer-readable media comprise computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

By way of background, a traditional telecommunications network employs a plurality of access points (i.e., access point, node, cell sites, cell towers) to provide network coverage. The access points are employed to broadcast and transmit transmissions to user devices of the telecommunications network. An access point may be considered to be a portion of an access point that may comprise an antenna, a radio, and/or a controller. In aspects, an access point is defined by its ability to communicate with a user equipment (UE), such as a wireless communication device (WCD), according to a single protocol (e.g., 3G, 4G, LTE, 5G, and the like); however, in other aspects, a single access point may communicate with a UE according to multiple protocols. As used herein, an access point may comprise one access point or more than one access point. Factors that can affect the telecommunications transmission include, e.g., location and size of the access points, and frequency of the transmission, among other factors. The access points are employed to broadcast and transmit transmissions to user devices of the telecommunications network. Traditionally, the access point establishes uplink (or downlink) transmission with a mobile handset over a single frequency that is exclusive to that particular uplink connection (e.g., an LTE connection with an EnodeB). The access point may include one or more sectors served by individual transmitting/receiving components associated with the access point (e.g., antenna arrays controlled by an EnodeB). These transmitting/receiving components together form a multi-sector broadcast arc for communication with mobile handsets linked to the access point.

As used herein, "access point" is one or more transmitters or receivers or a combination of transmitters and receivers, including the accessory equipment, necessary at one location for providing a service involving the transmission, emission, and/or reception of radio waves for one or more specific telecommunication purposes to a mobile station (e.g., a UE). The term/abbreviation UE (also referenced herein as a user device or wireless communications device (WCD)) can include any device employed by an end-user to communicate with a telecommunications network, such as a wireless telecommunications network. A UE can include a mobile device, a mobile broadband adapter, or any other communications device employed to communicate with the wireless telecommunications network. A UE, as one of ordinary skill in the art may appreciate, generally includes one or more antennas coupled to a radio for exchanging (e.g., transmitting and receiving) transmissions with a nearby access point. A UE may be, in an embodiment, similar to device 1000 described herein with respect to FIG. 10.

As used herein, UE (also referenced herein as a user device or a wireless communication device) can include any device employed by an end-user to communicate with a wireless telecommunications network. A UE can include a mobile device, a mobile broadband adapter, a fixed location or temporarily fixed location device, or any other communications device employed to communicate with the wireless telecommunications network. For an illustrative example, a UE can include cell phones, smartphones, tablets, laptops, small cell network devices (such as micro cell, pico cell, femto cell, or similar devices), and so forth. Further, a UE can include a sensor or set of sensors coupled with any other communications device employed to communicate with the wireless telecommunications network; such as, but not limited to, a camera, a weather sensor (such as a rain gage, pressure sensor, thermometer, hygrometer, and so on), a motion detector, or any other sensor or combination of sensors. A UE, as one of ordinary skill in the art may appreciate, generally includes one or more antennas coupled to a radio for exchanging (e.g., transmitting and receiving) transmissions with a nearby access point or access point.

UE data may be collected at predetermined time intervals measured in milliseconds, seconds, minutes, hours, or days. Alternatively, the UE data may be collected continuously. The UE data may be stored at a storage device of the UE, and may be retrievable by the UE's primary provider as needed and/or the UE data may be stored in a cloud based storage database and may be retrievable by the UE's primary provider as needed. When the UE data is stored in the cloud based storage database, the data may be stored in association with a data identifier mapping the UE data back to the UE, or alternatively, the UE data may be collected without an identifier for anonymity. For example, the UE data may include OCR character strings, quick response (QR) codes, and the like. QR codes are used in many applications to provide additional information about a product or service, or other contexts. The character strings may be shared with a machine learning application that uses the character strings to train a digital vision context aware apparatus to interpret and correctly identify a context in which the character strings are used, whether that use is on a shipping label related to the character string and corresponding to a particular shipping and delivery company, or another context (e.g., registration forms, website application data, etc.).

A first aspect of the present disclosure provides a method for context aware digital vision and recognition. The method comprises receiving a location of a user equipment (UE); determining contextual data related to the location of the UE; selecting an image data capture instruction based on the location of the UE and the contextual data related to the location of the UE; and executing the image data capture instruction.

A second aspect of the present disclosure provides a system of context aware digital vision in a network. The system comprises one or more processors and one or more computer-readable media storing computer-usable instructions that, when executed by the one or more processors, cause the one or more processors to: receive a location of a user equipment (UE); determine contextual data related to the location of the UE; select an image data capture instruction based on the location of the UE and the contextual data related to the location of the UE; and execute the image data capture instruction.

Another aspect of the present disclosure is directed to a non-transitory computer storage media storing computer-usable instructions that cause one or more processors to: receive a location of a user equipment (UE); determine contextual data related to the location of the UE; select an image data capture instruction based on the location of the UE and the contextual data related to the location of the UE; and execute the image data capture instruction.

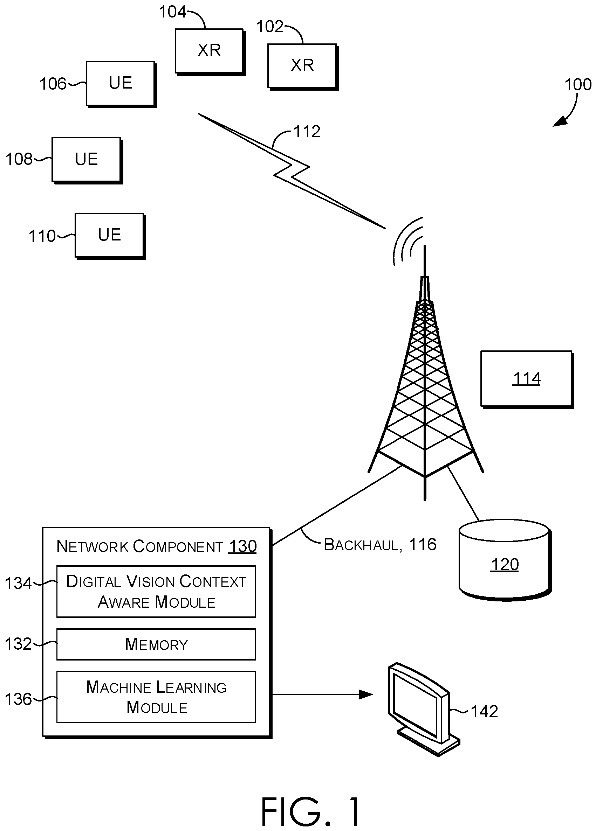

FIG. 1 illustrates an example of a network environment 100 suitable for use in implementing embodiments of the present disclosure. The network environment 100 is but one example of a suitable network environment and is not intended to suggest any limitation as to the scope of use or functionality of the disclosure. Neither should the network environment 100 be interpreted as having any dependency or requirement to any one or combination of components illustrated.

Network environment 100 includes user devices (UE) 102, 104, 106, 108, and 110, access point 114 (which may be a cell site, access point, or the like), and one or more communication channels 112. The communication channels 112 can communicate over frequency bands assigned to the carrier. In network environment 100, user devices may take on a variety of forms, such as a personal computer (PC), a user device, a smart phone, a smart watch, a laptop computer, a mobile phone, a mobile device, a tablet computer, a wearable computer, a personal digital assistant (PDA), a server, a CD player, an MP3 player, a global positioning system (GPS) device, a video player, a handheld communications device, a workstation, a router, a hotspot, and any combination of these delineated devices, or any other device (such as the computing device 1000) that communicates via wireless communications with the access point 114 in order to interact with a public or private network.

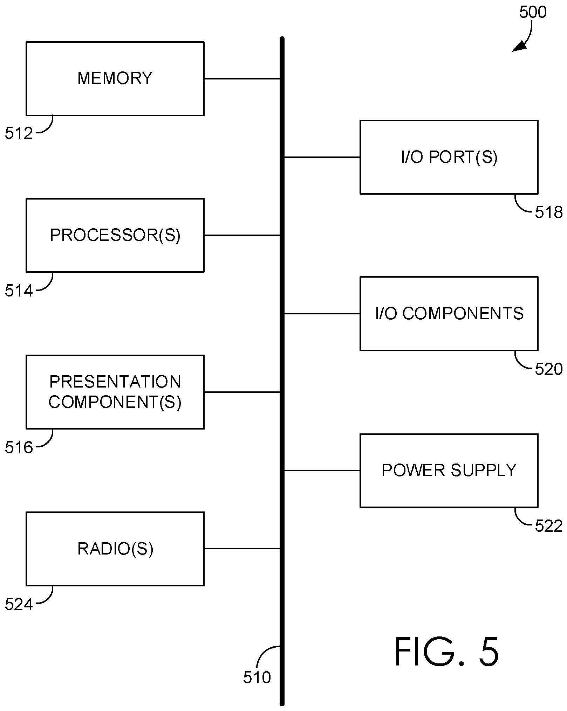

In some aspects, each of the UEs 102, 104, 106, 108, and 110 may correspond to computing device 500 in FIG. 5. Thus, a UE can include, for example, a display(s), a power source(s) (e.g., a battery), a data store(s), a speaker(s), memory, a buffer(s), a radio(s) and the like. In some implementations, for example, a UEs 102, 104, 106, 108, and 110 comprise a wireless or mobile device with which a wireless telecommunication network(s) can be utilized for communication (e.g., voice and/or data communication). In this regard, the user device can be any mobile computing device that communicates by way of a wireless network, for example, a 3G, 4G, 5G, 6G, LTE, CDMA, or any other type of network. UEs 102, 104, 106, 108, and 110 may also incorporate an OCR reader or the OCR reader may be accessed through an application running on the network 100. In some cases, UEs 102, 104, 106, 108, and 110 in network environment 100 can optionally utilize one or more communication channels 112 to communicate with other computing devices (e.g., a mobile device(s), a server(s), a personal computer(s), etc.) through access point 114.

The network environment 100 may be comprised of a telecommunications network(s), or a portion thereof. A telecommunications network might include an array of devices or components (e.g., one or more access points), some of which are not shown. Those devices or components may form network environments similar to what is shown in FIG. 1, and may also perform methods in accordance with the present disclosure. Components such as terminals, links, and nodes (as well as other components) can provide connectivity in various implementations. Network environment 100 can include multiple networks, as well as being a network of networks, but is shown in more simple form so as to not obscure other aspects of the present disclosure.

The one or more communication channels 112 can be part of a telecommunication network that connects subscribers to their immediate telecommunications service provider (i.e., home network carrier). In some instances, the one or more communication channels 112 can be associated with a telecommunications provider that provides services (e.g., 3G network, 4G network, LTE network, 5G network, 6G, and the like) to user devices, such as UEs 102, 104, 106, 108, and 110. For example, the one or more communication channels may provide voice, SMS, and/or data services to UEs 102, 104, 106, 108, and 110, or corresponding users that are registered or subscribed to utilize the services provided by the telecommunications service provider. The one or more communication channels 112 can comprise, for example, a 1x circuit voice, a 3G network (e.g., CDMA, CDMA2000, WCDMA, GSM, UMTS), a 4G network (WiMAX, LTE, HSDPA), or a 5G network or a 6G network.

In some implementations, access point 114 is configured to communicate with a UE, such as UEs 102, 104, 106, 108, and 110, that are located within the geographic area, or cell, covered by radio antennas of access point 114. Access point 114 may include one or more access points, base transmitter stations, radios, antennas, antenna arrays, power amplifiers, transmitters/receivers, digital signal processors, control electronics, GPS equipment, and the like.

As shown, access point 114 is in communication with a network component 130 and at least a network database 120 via a backhaul channel 116. As the UEs 102, 104, 106, 108, and 110 collect individual signal information, the signal information can be automatically communicated by each of the UEs 102, 104, 106, 108, and 110 to the access point 114. Access point 114 may store the signal information and data communicated by the UEs 102, 104, 106, 108, and 110 at a network database 120. Alternatively, the access point 114 may automatically retrieve the status data from the UEs 102, 104, 106, 108, and 110, and similarly store the data in the network database 120. The signal information and data may be communicated or retrieved and stored periodically within a predetermined time interval which may be in seconds, minutes, hours, days, months, years, and the like. The signal information and data may include information about uses and contexts of digital vision systems, including camera systems.

The network component 130 comprises a memory 132, a digital vision context aware module 134, and a machine learning module 136. All determinations, calculations, and data further generated by the digital vision context aware module 134 may be stored at the memory 132 and also at the network database 120 and may also be transmitted to the machine learning module 136. Although the network component 130 is shown as a single component comprising the memory 132, digital vision context aware module 134, and machine learning module 136, it is also contemplated that each of the memory 132, digital vision context aware module 134, and machine learning module 136 may reside at different locations, be its own separate entity, and the like, within the home network carrier system. Computer terminal 142 is in communication with the network component 130, and, through network component 130, the memory 132, the digital vision context aware module 134, and the machine learning module 136.

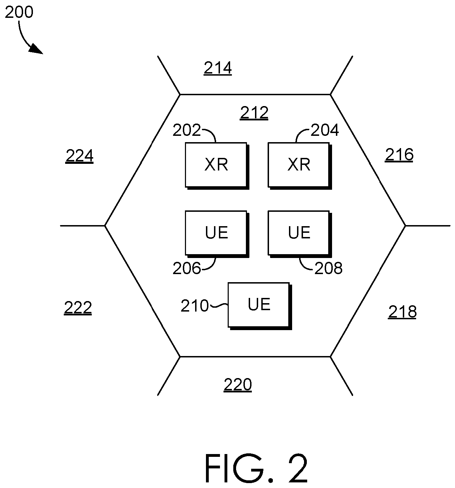

The network component 130 is configured to retrieve or receive digital vision from the access point 114 or one of the UEs, 102, 104, 106, 108, and 110. The digital vision metrics may include specific OCR or digital vision character strings, applications resident on the UE that access a digital vision function, success or failure metrics for digital vision actions, user satisfaction indices, and the like. The network component 130 can also track uplink and downlink digital vision activities and traffic as well as network congestion. The digital vision context aware module 134 can observe digital vision usage on at least one common channel over the network and may share the digital usage with the machine learning module 136. The digital vision context aware module 134 may be located in a central office or other centralized location. For a distributed radio access network, the memory 132 and the digital vision context aware module 134 can be located at the access point 114. The machine learning module 136 may be located at a central office, but may also be located at an access point. The network environment 100 depicted in FIG. 1 may be accessed by users through a cellular network, which is described in FIG. 2.

FIG. 2 depicts a cellular network suitable for use in implementations of the present disclosure, in accordance with aspects herein. For example, as shown in FIG. 2, each area in the plurality of geographic areas 200 may have a hexagonal shape such as the hexagons representing a geographic area having cell sites 212, 214, 216, 218, 220, 222, 224, each including access point 114, backhaul channel 116, antenna for sending and receiving signals over communication channels 112, network database 120 and network component 130. The size of the geographic area 200 may be predetermined based on a level of granularity, detail, and/or accuracy desired for the determinations/calculations done by the systems, computerized methods, and computer-storage media. A plurality of UEs may be located within each geographic area collecting UE data within the geographic area at a given time. For example, as shown in FIG. 2, UEs 202, 204, 206, 208, and 210 may be located within geographic area 200 collecting UE data that is useable by network component 130, in accordance with aspects herein. UEs 202, 204, 206, 208, and 210 can move within the cell currently occupied, such as cell site 212 and can move to other cells such as adjoining cell sites 214, 216, 218, 220, 222 and 224.

Users may use the cellular network of FIG. 2 in conjunction with a variety of activities, such as using digital vision applications in a variety of contexts. As examples, a user may use digital vision capability to scan an item associated with the context that may contain a redemption code, a bar code, or access other services. Those other services could include shopping, visiting museums and parks, sporting activities, lotteries, entertainment, dining, travel, such as a baggage claim check or boarding pass, banking, and government.

Digital vision, converts images of typed, handwritten or printed text into machine-encoded text. The digital vision application may use a character reader and may scan a document, photo, or subtitle text. The digitized texts may then be electronically edited searched, displayed, and used in machine processes, as well as used to access an application, such as a shipping application. Typically, digital vision usage targets typewritten text, one character or symbol at a time. The text or character strings analyzed may use one of multiple fonts and may also be handwritten or cursive characters.

The computer vision and digital vision functions described herein incorporate contextual data from network user profiles to improve the accuracy and efficiency of digital vision operations. This may be accomplished by incorporating contextual data into the digital vision application and associated applications. For example, network data identifying that a user is present at a shipping carrier location may trigger application of contextual data around a shipping experience, including a typical character string that represents a shipping tracking number, a format of said character string, a location of said character string within the shipping label, and the like. Contextual data from the network user profiles may include, but is not limited to location data, optical or visual cues, network traffic, and other patterns associated with the activity.

The data collected by the digital vision context aware module 134 in FIG. 1 may trigger a machine learning module 136 as well as an artificial intelligence application to preload content for the image capture device/digital vision context aware module 134. For instance, in the above scenario where a user is located at a shipping carrier location, a pre-loaded shipping label format associated with the shipping carrier can be identified and pre-loaded by the machine learning module 136 such that an image capture is targeted to a specific location and/or specific character strings. Over time, efficiency of the network is improved as less time and fewer network resources are needed to perform digital vision scans and produce completed scan results that are more accurate. In addition, as more examples and more contexts are scanned centralized models may be created.

The data collected may be received from network users with UEs running on the network. The type of data collected may include such information as common formats for character strings and identifying indicia that tie the data to a particular application, context, location, and company. The collected data may also be used to create user cohort profiles for similar users, based on the anonymized data. Thus, the digital vision context aware module learns and leverages context to improve network digital vision operations.

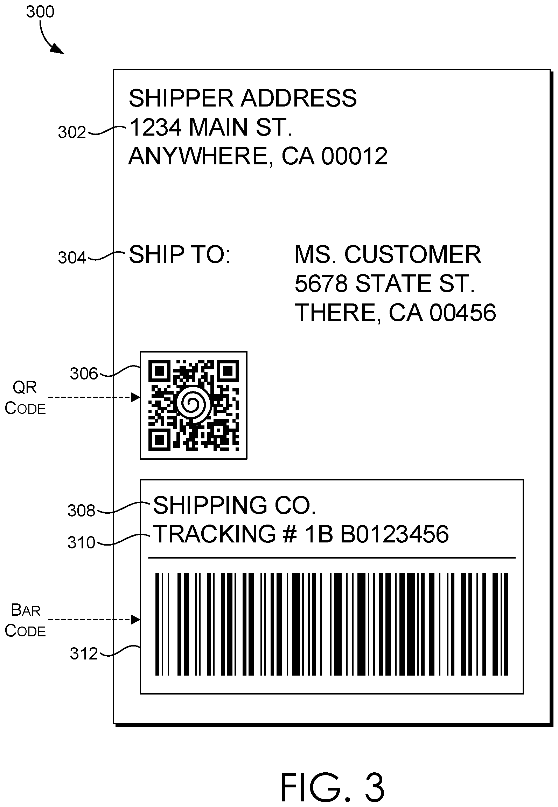

FIG. 3 depicts an exemplary use case in a shipping scenario on a UE in an exemplary network environment in which implementations of the present disclosure may be employed, in accordance with aspects herein. A shipping label 300 is shown in FIG. 3 but the present invention should not be limited to such an aspect, as several different use cases are applicable. The shipping label 300 includes multiple indicia of the specific context, with the indicia found on an item associated with the context. For example, shipper address 302 indicates a source of a shipment. The ship to address 304 indicates a specific customer/destination and a location of the customer/destination. In addition, the shipping label may include a QR code 306, which may be scanned during transport as the package is transported to the destination. The shipping label may also indicate a shipping company name 308 that identifies a specific company transporting the package. A tracking number 310 may also be included on the shipping label. The tracking number 310 may include characters, including numerals, symbols, and letters in a format unique to the particular shipping company identified by the shipping company name 308. The tracking number may be scanned and status updates may be communicated to the shipping company's website or any other relevant endpoint. Users may scan the tracking number 310 from a receipt or other device and rely on the OCR technology to correctly identify each of the numbers, letters, and symbols comprising the tracking number 310. In addition, the shipping label may also include a bar code 312 as an additional tool for tracking the package through the delivery system. As shown, the shipping label 300 includes a variety of information that can be captured by an image capture device. The information can be in a specific format and location on a shipping label, such that each time a user engages in this activity, the model can identify an anticipated format of the label, an anticipated location of each indicia on the label, and the like. In aspects, the information of the label (e.g., contents, locations thereof, etc.), can be pre-loaded by the model to the image capture device along with an indication to scan for a first item (rather than blindly scanning the label) and/or an indication to scan a particular location of the label (rather than the entire label image).

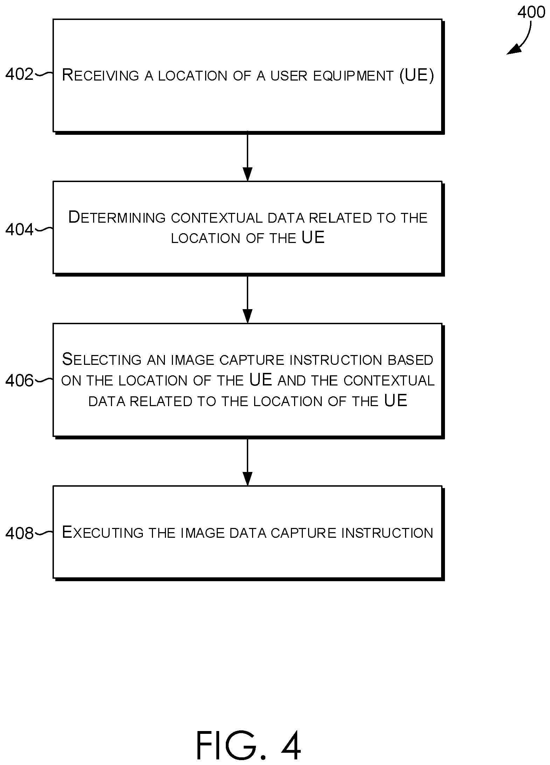

FIG. 4 is a flow diagram of a method for context aware digital vision, in accordance with aspects herein. The method 400 begins at block 402 with receiving a location of a user equipment (UE). At block 404, contextual data related to the location of the UE is determined. An image capture instruction based on the location of the UE and the contextual data related to the location of the UE is selected at block 406. The image capture data instruction is executed at block 408.

Telecommunications networks have access to a plethora of information regarding a UE. A location, as mentioned above, is one example of network data available. Other examples can include network usage patterns of a user, user activity patterns, network congestion data, and the like. By accessing a location, certain activities may be identified as related to that location. For instance, a shipping carrier location can be associated with accessing tracking numbers while a restaurant location may be associated with scanning menu QR codes or electronically paying a check. Other locations can be associated with specific registration forms. The use cases are endless for associating locations with specific activities.

By leveraging network data, it can be identified that a specific activity is expected at a location. Specific activities are associated with specific contextual data. For instance, a registration check-in is associated with a specific registration check-in form having specific fields at particular locations, while a shipping activity may be associated with a shipping label having particular fields at particular locations. The contextual data can be identified, based on the network data, and utilized to identify an image capture instruction.

An image capture instruction, as used herein, is a specific instruction(s) communicated to an image capture device of a UE to utilize when performing digital vision or OCR. Image capture instructions may include scanning a specific area of an image (instead of the entire image) or scanning an image (or portion thereof) for a specific character string.

Once the image capture instruction is selected, it is executed at the UE. Once executed, the user activity can be monitored to update a user profile associated with the user. User profiles can be used herein to anticipate actions by the machine learning module. Thus, actions taken after execution of the image capture instruction can be stored to update and train the machine learning module for future recommendations.

Additionally, user profiles may be aggregated into user profile cohorts for a group of users that have one or more matching characteristics. The user profile cohorts may be applied to users outside of the cohort to make recommendations based on similar activities and contextual information. For instance, a user profile cohort may identify, for a particular cohort, that user activity X corresponds to contextual data Y and image capture instruction Z. However, User M may not belong to the cohort but may be taking part in user activity X. The machine learning module can identify that user that take part in activity X typically perform a specific action and recommend image capture instruction Z for User M. User M's actions after execution can be stored by the machine learning module in order to further customize future recommendations for User M. Improving the operation of the network, user device, and digital vision elements may be provided by machine learning methods that are trained on the completed scan results and subsequent user activity.

FIG. 5 depicts an exemplary computing device suitable for use in implementations of the present disclosure, in accordance with aspects herein. With continued reference to FIG. 5, computing device 500 includes bus 510 that directly or indirectly couples the following devices: memory 512, one or more processors 514, one or more presentation components 516, input/output (I/O) ports 518, I/O components 520, radio(s) 524, and power supply 522. Bus 510 represents what may be one or more busses (such as an address bus, data bus, or combination thereof). Although the devices of FIG. 5 are shown with lines for the sake of clarity, in reality, delineating various components is not so clear, and metaphorically, the lines would more accurately be grey and fuzzy. For example, one may consider a presentation component such as a display device to be one of I/O components 520. Also, processors, such as one or more processors 514, have memory. The present disclosure hereof recognizes that such is the nature of the art, and reiterates that FIG. 5 is merely illustrative of an exemplary computing environment that can be used in connection with one or more implementations of the present disclosure. Distinction is not made between such categories as "workstation," "server," "laptop," "handheld device," etc., as all are contemplated within the scope of FIG. 5 and refer to "computer" or "computing device."

The implementations of the present disclosure may be described in the general context of computer code or machine-useable instructions, including computer-executable instructions such as program components, being executed by a computer or other machine, such as a personal data assistant or other handheld device. Generally, program components, including routines, programs, objects, components, data structures, and the like, refer to code that performs particular tasks or implements particular abstract data types. Implementations of the present disclosure may be practiced in a variety of system configurations, including handheld devices, consumer electronics, general-purpose computers, specialty computing devices, etc. Implementations of the present disclosure may also be practiced in distributed computing environments where tasks are performed by remote-processing devices that are linked through a communications network.

Computing device 500 typically includes a variety of computer-readable media. Computer-readable media can be any available media that can be accessed by computing device 500 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes RAM, ROM, EEPROM, flash memory or other memory technology, CD-ROM, digital versatile disks (DVD) or other optical disk storage, magnetic cassettes, magnetic tape, magnetic disk storage or other magnetic storage devices. Computer storage media does not comprise a propagated data signal.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 512 includes computer-storage media in the form of volatile and/or nonvolatile memory. Memory 512 may be removable, nonremovable, or a combination thereof. Exemplary memory includes solid-state memory, hard drives, optical-disc drives, etc. Computing device 500 includes one or more processors 506 that read data from various entities such as bus 510, memory 512 or I/O components 520. One or more presentation components 516 present data indications to a person or other device. Exemplary one or more presentation components 516 include a display device, speaker, printing component, vibrating component, etc. I/O ports 518 allow computing device500 to be logically coupled to other devices including I/O components 520, some of which may be built into computing device 500. Illustrative I/O components 520 include a microphone, joystick, game pad, satellite dish, scanner, printer, wireless device, etc.

The radio(s) 524 represents one or more radios that facilitate communication with a wireless telecommunications network. While a single radio 524 is shown in FIG. 5, it is contemplated that there may be more than one radio 524 coupled to the bus 510. Illustrative wireless telecommunications technologies include CDMA, GPRS, TDMA, GSM, and the like. The radio 524 may additionally or alternatively facilitate other types of wireless communications including Wi-Fi, WiMAX, LTE, 3G, 4G, LTE, 5G, NR, VoLTE, or other VoIP communications. As can be appreciated, in various embodiments, radio 524 can be configured to support multiple technologies and/or multiple radios can be utilized to support multiple technologies. A wireless telecommunications network might include an array of devices, which are not shown so as to not obscure more relevant aspects of the invention. Components such as a access point, a communications tower, or even access points (as well as other components) can provide wireless connectivity in some embodiments.

Many different arrangements of the various components depicted, as well as components not shown, are possible without departing from the scope of the claims below. Embodiments of our technology have been described with the intent to be illustrative rather than restrictive. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims.

## Claims

1. A method for context aware digital vision in a network, the method comprising:
receiving a location of a user equipment (UE);
determining contextual data related to the location of the UE;
selecting an image data capture instruction based on the location of the UE and the contextual data related to the location of the UE; and
executing the image data capture instruction.

2. The method of claim 1, wherein the image data capture instruction is to capture data in a first area of an image.

3. The method of claim 1, wherein the image data capture instruction is to capture a specific character string in an image.

4. The method of claim 1, wherein the contextual data includes: a format of an anticipated image to be captured at the location of the UE; or a character string within an anticipated image to be captured at the location of the UE.

5. The method of claim 1, further comprising receiving an indication that an image capture device of the UE is accessed.

6. The method of claim 1, further comprising updating a user profile based on UE activity after executing the image data capture instruction.

7. The method of claim 6, wherein the user profile is created by a machine learning module of the UE.

8. A system for context aware digital vision in a network, the system comprising:
one or more processors; and
one or more computer-readable media storing computer-usable instructions that, when executed by the one or more processors, cause the one or more processors to:
receive a location of a user equipment (UE);
determine contextual data related to the location of the UE;
select an image data capture instruction based on the location of the UE and the contextual data related to the location of the UE; and
execute the image data capture instruction.

9. The system of claim 8, wherein the image data capture instruction is to capture data in a first area of an image.

10. The system of claim 8, wherein the image data capture instruction is to capture a specific character string in an image.

11. The system of claim 8, wherein the contextual data includes: a format of an anticipated image to be captured at the location of the UE; or a character string within an anticipated image to be captured at the location of the UE.

12. The system of claim 8, wherein the one or more processors is further configured to receive an indication that an image capture device of the UE is accessed.

13. The system of claim 8, wherein the one or more processors is further configured to update a user profile based on UE activity after executing the image data capture instruction.

14. The system of claim 13, wherein the user profile is created by a machine learning module of the UE.

15. A computer-readable storage media storing instructions thereon which, when used by one or more processors, cause the one or more processors to perform the method of any of claims 1 to 7.
